(19) Europäisches Patentamt / European Patent Office / Office européen des brevets

(11) **EP 3 561 226 A1**

(12) **EUROPEAN PATENT APPLICATION**

(43) Date of publication:
**30.10.2019 Bulletin 2019/44**

(51) Int Cl.:
*F01D 5/14* (2006.01)   *F01D 5/20* (2006.01)

(21) Application number: **18168894.6**

(22) Date of filing: **24.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft 80333 München (DE)**

(72) Inventors:
• **Bruni, Giuseppe**
  **Lincoln, LN1 1AB (GB)**
• **Krishnababu, Senthil**
  **Lincoln, LN2 4WF (GB)**

(74) Representative: **Maier, Daniel Oliver**
  **Siemens AG**
  **Postfach 22 16 34**
  **80506 München (DE)**

(54) **COMPRESSOR AEROFOIL**

(57)    A compressor aerofoil (70) for a turbine engine. The compressor aerofoil (70) comprises a tip portion (100) which extends in a first direction $R_b$ from a main body portion (102). The main body portion (102) is defined by a suction surface wall (88) having a suction surface (89) and a pressure surface wall (90) having a pressure surface (91). The suction surface wall (88) and the pressure surface wall (90) meet at a leading edge (76) and a trailing edge (78). The tip portion (100) comprises a tip wall (106) which extends continuously along a camber line (107) of the aerofoil, the camber line (107) extending from the aerofoil leading edge (76) to the aerofoil trailing edge (78). A shoulder (104, 105) is provided on each of the suction surface wall (88) and pressure surface wall (90). A transition region (108, 109) tapers from each of the shoulders (104, 105) in a direction towards the tip wall (106). The tip wall (106) defines a squealer (110) with a tip surface (118) which increases in width $w_s$ from the leading edge (76) to a point of maximum width, and then decreases in width $w_s$ all the way to the trailing edge (78).

FIG 7

## Description

The present invention relates to a compressor aerofoil.

In particular it relates to a compressor aerofoil rotor blade and/or compressor aerofoil stator vane for a turbine engine, and/or a compressor rotor assembly.

## Background

A compressor of a gas turbine engine comprises rotor components, including rotor blades and a rotor drum, and stator components, including stator vanes and a stator casing. The compressor is arranged about a rotational axis with a number of alternating rotor blade and stator vane stages, and each stage comprises an aerofoil.

The efficiency of the compressor is influenced by the running clearances or radial tip gap between its rotor and stator components. The radial gap or clearance between the rotor blades and stator casing and between the stator vanes and the rotor drum is set to be as small as possible to minimise over tip leakage of working gases, but sufficiently large to avoid significant rubbing that can damage components. The pressure difference between a pressure side and a suction side of the aerofoil causes the working gas to leak through the tip gap. This flow of working gas or over-tip leakage generates aerodynamic losses due to its viscous interaction within the tip gap and with the mainstream working gas flow particularly on exit from the tip gap. This viscous interaction causes loss of efficiency of the compressor stage and subsequently reduces the efficiency of the gas turbine engine.

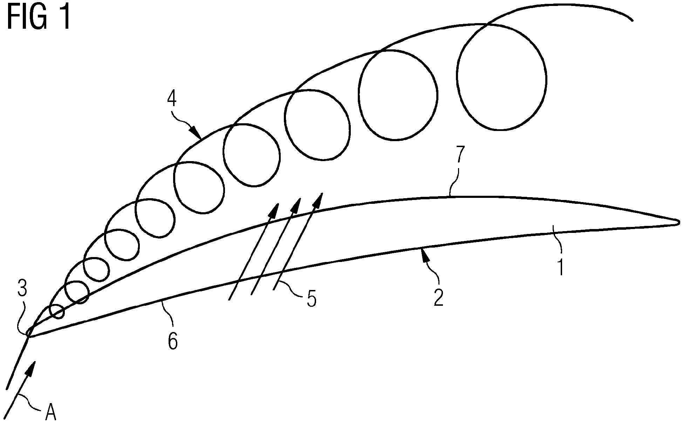

Two main components to the over tip leakage flow have been identified, which is illustrated in Figure 1, which shows an end on view of a tip 1 of an aerofoil 2 in situ in a compressor, thus showing a tip gap region. A first leakage component "A" originates near a leading edge 3 of the aerofoil at the tip 1 and which forms a tip leakage vortex 4, and a second component 5 that is created by leakage flow passing over the tip 1 from the pressure side 6 to the suction side 7. This second component 5 exits the tip gap and feeds into the tip leakage vortex 4 thereby creating still further aerodynamic losses.

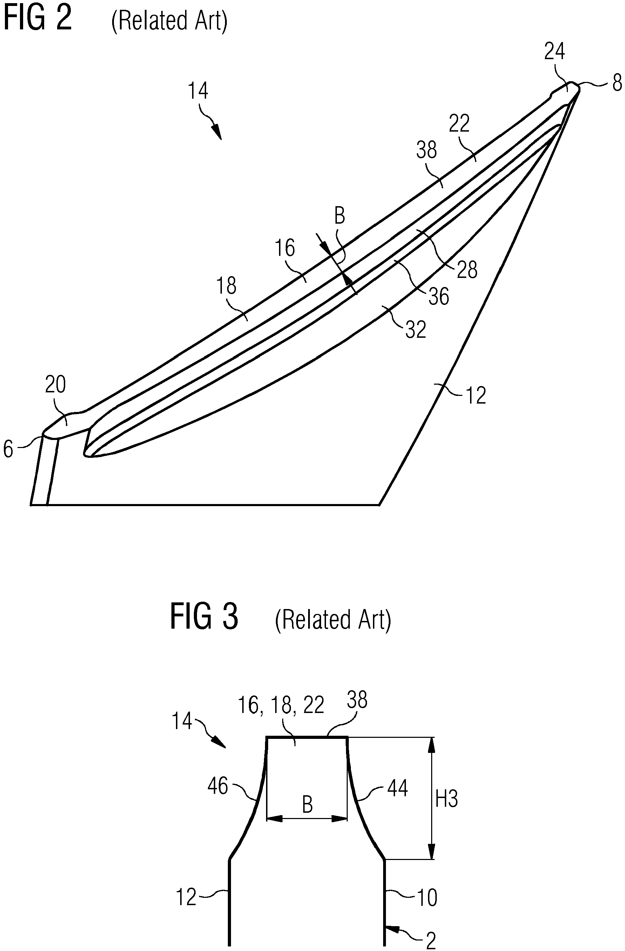

US9399918B2 (MTU Aero Engines AG), shown in Figure 2, describes an example of the related art, albeit configured to solve a different problem, namely blade tip vibrational stress. The document describes a blade 2 with a leading edge 6, trailing edge 8 and blade tip 14. The blade tip 14 has a middle section 16, a front partial section 18, a front end section 20, a rear partial section 22 and a rear end section 24. The middle section 16 is arranged in the middle between the leading edge 6 and the trailing edge 8. The front partial section 18 extends upstream from the middle section 16 and makes a transition into the front end section 20 that forms the leading edge 6. The rear partial section 22 extends downstream from the middle section 16 and makes a transition into the rear end section 24 that forms the trailing edge 8. The partial sections 18, 22 taper with respect to the middle section 16. They have their largest crosswise extension or width B in the area of the middle section 16, and their smallest crosswise extension or width B directly at the end sections 20, 24. The cross section of the middle section 16 is gradually reduced with respect to the pressure-side wall 10 as well as to the suction-side wall 12 in the direction of the leading edge 6 and of the trailing edge 8 respectively. The end sections 20, 24 are not tapered with respect to the pressure-side wall 10 and to the suction-side wall 12. They each accommodate the blade profile of the pressure-side wall 10 and of the suction-side wall 12 and thus have an arrow-like shape as shown in a top view in the depiction of Figure 1.

Figure 3 shows the cross section of modification to the design of Figure 1. The side surfaces of the middle section 16 and of the partial sections 18, 22 are configured as concave surfaces 44, 46. The concave surfaces 44, 46 extend directly from a pressure-side wall 10 and from a suction-side wall 12, and they preferably have a constant radius.

However for at least the presence of the arrow-like end shape of sections 20, 24, particularly the transition between areas indicated by numerals 18 and 20, and between areas indicated by 22 and 24, and the sharp transition between area 46 and side wall 12 (and area 44 and side wall 10) in the radial direction, may result in complex aerodynamic interactions and losses without providing a reduction in tip flow leakage.

EP2514922A2 (General Electric Company) discloses another example of the related art configured to solve a different problem, namely blade tip rub and erosion. In this example a blade tip 68 has a constant thickness along its length. Although perhaps effective for solving blade tip damage due to tip rub, this solution may not provide a reduction in tip flow leakage and may result in aerodynamic losses.

Hence an aerofoil design which can reduce either or both tip leakage components without causing further aerodynamic interactions and losses is highly desirable.

## Summary

According to the present disclosure there is provided apparatus as set forth in the appended claims. Other features of the invention will be apparent from the dependent claims, and the description which follows.

Accordingly there may be provided a compressor aerofoil (70) for a turbine engine. The compressor aerofoil (70) may comprise a tip portion (100) which extends in a first direction $R_b$ from a main body portion (102). The main body portion (102) may be defined by a suction surface wall (88) having a suction surface (89), a pressure surface wall (90) having a pressure surface (91), whereby the suction surface wall (88) and the pressure surface wall (90) meet at a leading edge (76) and a trailing edge (78), and the pressure surface (91) and the suction surface (89) are spaced apart by a distance $w_B$ in a second direction $C_b$ at right angles to the first direction $R_b$ between the leading edge (76) and the trailing edge (78). The tip portion (100) may comprise : a tip wall (106) which extends continuously along a camber line (107) of the aerofoil, the camber line (107) extending from the aerofoil leading edge (76) to the aerofoil trailing edge (78). A shoulder (104, 105) may be provided on each of the suction surface wall (88) and pressure surface wall (90). The suction surface wall shoulder (105) may extend between the leading edge (76) and the trailing edge (78). The pressure surface wall shoulder (104) may extend between the leading edge (76) and the trailing edge (78). A transition region (108, 109) may taper from each of the shoulders (104, 105) in a direction towards the tip wall (106) the cross sectional shape of the tip portion (100) varies along the full extent of the camber line (107). The tip wall (106) may define a squealer (110) with a tip surface (118) which increases in width $w_s$ from the leading edge (76) to a point of maximum width, and then decreases in width $w_S$ all the way to the trailing edge (78).

In operation the aerofoil of the present application provides a means of reducing aerodynamic loss generation by reducing tip leakage flow. The geometry defined above increases momentum of tip leakage flow which thus reduces mixing between the tip leakage flow (i.e. flows 4, 5 in Figure 1) and main stream flow passing the aerofoil. The configuration of the present disclosure also acts to reduce an undesirable mismatch between the tip leakage flow angle and the main stream flow angle, thereby further reducing the interaction/mixing of the tip leakage flow and main stream flow.

Hence the compressor aerofoil of the present disclosure provides a means of controlling losses by reducing the tip leakage flow.

The point of maximum width of the tip portion (100) tip surface (118) may be closer to the leading edge (76) than to the trailing edge (78). Alternatively the point of maximum width of the tip portion (100) tip surface (118) may be closer to the trailing edge (78) than to the leading edge (76). These configurations further reduce tip leakage flow and hence further reduce aerodynamic loss.

The point of maximum width of the tip portion (100) tip surface (118) may be between 0.1 and 0.9 of the distance along the camber line (107) between the leading edge (76) and trailing edge (78). This configuration may further reduce tip leakage flow at specific locations.

The point of maximum width of the squealer (110) tip surface (118) may be between 0.1 and 0.3 of the distance along the camber line (107) between the leading edge (76) and trailing edge (78). Alternatively the point of maximum width of the squealer (110) tip surface (118) may be between 0.1 and 0.3 of the distance along the camber line (107) between the trailing edge (78) and leading edge (76). These configurations may further reduce tip leakage flow at specific locations.

The tip wall (106) may define a tip surface (118) which extends from the aerofoil leading edge (76) to the aerofoil trailing edge (78); the transition region (109) of the suction surface wall (88) comprises a convex region which extends from the shoulder (104) in a direction towards the pressure surface (91), and at a suction side inflexion point (121) the transition region (109) curves to form a concave region which extends in a direction away from the pressure surface (91) toward the tip surface (118); and the transition region (108) of the pressure surface wall (90) comprises a convex region which extends from the shoulder (105) in a direction towards the suction surface (89), and at a pressure side inflexion point (120) the transition region (108) curves to form a concave region which extends in a direction away from the suction surface (89) toward the tip surface (118). This configuration may further reduce tip leakage flow across the tip surface (110).

The tip portion (100) may further comprise : a suction surface inflexion line (123) defined by a change in curvature on the suction surface (89); and the suction side inflexion point (121) being provided on the pressure side inflexion line (123); the suction side inflexion line (123) extending between the trailing edge (78) and the leading edge (76); and a pressure surface inflexion line (122) defined by a change in curvature on the pressure surface (91); the pressure side inflexion point (120) being provided on the pressure side inflexion line (122); the pressure side inflexion line (122) extending between the leading edge (76) and the trailing edge (78). This configuration may further reduce tip leakage flow across the tip surface (110).

The distance $w_B$ may have a maximum value at a region between the leading edge (76) and trailing edge (78); the distance $w_B$ between the pressure surface (91) and the suction surface (89) decreases in value from the maximum value towards the leading edge (76); and the distance $w_B$ between the pressure surface (91) and the suction surface (89) decreases in value from the maximum value towards the trailing edge (78).

The width $w_S$ of the tip wall (106) may have a value of at least 0.2, but not more than 0.8, of the distance $w_B$. This configuration may further reduce tip leakage flow across the tip surface (110) in predetermined areas of interest.

There may also be provided a compressor rotor assembly for a turbine engine, the compressor rotor assembly comprising a casing (50) and a compressor aerofoil (70) according to the present disclosure, wherein the casing (50) and the compressor aerofoil (70) define a tip gap $hg$ defined between the tip surface (118) and the casing (50).

The shoulder (104, 105) may be provided a distance $h_1$ from the casing (50), where $h_1$ has a value of at least $h_g$, but not more than 10 times the distance $h_g$. This configuration may allow for controlling tip leakage flow across the tip surface (110).

A distance $h_2$ from the inflexion line (122,123) to the casing (50) may have a value of at least 0.2 $h_1$ but no more than 0.8 $h_1$.

The distance "W" of a point on the transition region (108, 109) of one of the suction surface wall (88) or pressure surface wall (90) to the other wall for a given height "h" from the tip surface (118) may be defined by :

$$W = W_B \left( sin \frac{\pi h}{2h_1} \right)^{\alpha}$$

where $\alpha$ (alpha) has a value of at least zero but no greater than 2. This configuration, affecting the profile of the tip region (100), may allow for controlling tip leakage flow across the tip surface (110).

Hence there is provided an aerofoil for a compressor reduces the tip leakage mass flow thus diminishing the strength of the interaction between the leakage flow and the main stream flow which in turn reduces loss in efficiency relative to examples of the related art.

**Brief Description of the Drawings**

Examples of the present disclosure will now be described with reference to the accompanying drawings, in which:

Figure 1 shows an example aerofoil tip, as discussed in the background section;

Figures 2, 3 shows an example of the related art as discussed in the background section;

Figure 4 shows part of a turbine engine in a sectional view and in which an aerofoil of the present disclosure may be provided;

Figure 5 shows an enlarged view of part of a compressor of the turbine engine of Figure 4;

Figure 6 shows part of a main body and a tip region of an example of an aerofoil according to the present disclosure;

Figure 7 shows an end on view of a part of the tip region of the aerofoil shown in Figure 6;

Figure 8 shows a sectional view of the aerofoil as indicated at A-A in Figures 6, 7; and

Figure 9 is a table of relative dimensions of the features shown in Figures 6, 7, 8.

**Detailed Description**

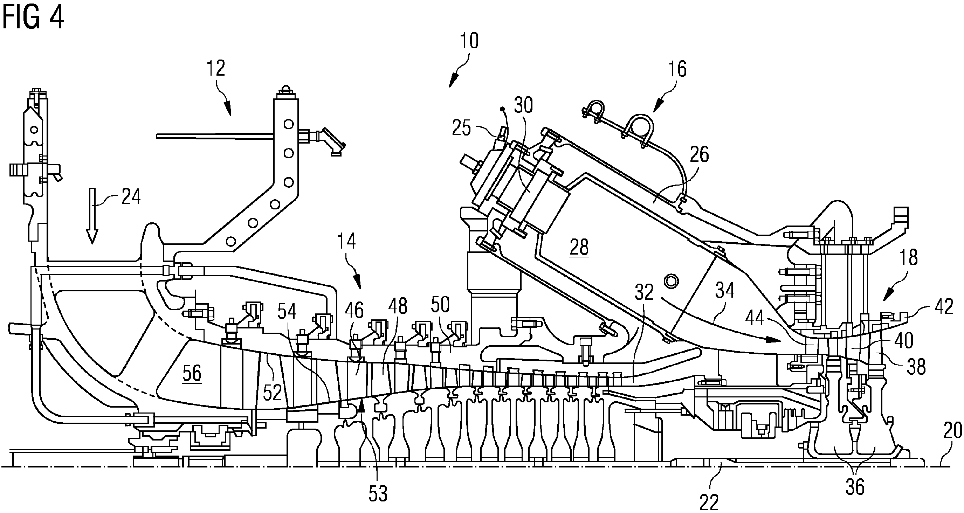

Figure 4 shows an example of a gas turbine engine 10 in a sectional view which may comprise an aerofoil and compressor rotor assembly of the present disclosure.

The gas turbine engine 10 comprises, in flow series, an inlet 12, a compressor section 14, a combustor section 16 and a turbine section 18 which are generally arranged in flow series and generally about and in the direction of a longitudinal or rotational axis 20. The gas turbine engine 10 further comprises a shaft 22 which is rotatable about the rotational axis 20 and which extends longitudinally through the gas turbine engine 10. The shaft 22 drivingly connects the turbine section 18 to the compressor section 14.

In operation of the gas turbine engine 10, air 24, which is taken in through the air inlet 12 is compressed by the compressor section 14 and delivered to the combustion section or burner section 16. The burner section 16 comprises a burner plenum 26, one or more combustion chambers 28 and at least one burner 30 fixed to each combustion chamber 28.

The combustion chambers 28 and the burners 30 are located inside the burner plenum 26. The compressed air passing through the compressor 14 enters a diffuser32 and is discharged from the diffuser 32 into the burner plenum 26 from where a portion of the air enters the burner 30 and is mixed with a gaseous or liquid fuel. The air/fuel mixture is then burned and the resulting combustion gas 34 or working gas from the combustion is channelled through the combustion chamber 28 to the turbine section 18.

The turbine section 18 comprises a number of blade carrying discs 36 attached to the shaft 22. In addition, guiding vanes 40, which are fixed to a stator 42 of the gas turbine engine 10, are disposed between the stages of annular arrays of turbine blades 38. Between the exit of the combustion chamber 28 and the leading turbine blades 38, inlet guiding vanes 44 are provided and turn the flow of working gas onto the turbine blades 38.

The combustion gas from the combustion chamber 28 enters the turbine section 18 and drives the turbine blades 38 which in turn rotate the shaft 22. The guiding vanes 40, 44 serve to optimise the angle of the combustion or working gas on the turbine blades 38.

Compressor aerofoils (that is to say, compressor rotor blades and compressor stator vanes) have a smaller aspect ratio than turbine aerofoils (that is to say, turbine rotor blades and turbine stator vanes), where aspect ratio is defined as the ratio of the span (i.e. width) of the aerofoil to the mean chord of the aerofoil. For the avoidance of doubt, the term "chord" refers to an imaginary straight line which joins a leading edge and trailing edge of the aerofoil. Hence a chord length L is the distance between the trailing edge and the point on the leading edge where the chord intersects the leading edge.

Turbine aerofoils have a relatively large aspect ratio because they are necessary broader (i.e. wider) to accommodate cooling passages and cavities, whereas compressor aerofoils, which do not require cooling, are relatively narrow.

Compressor aerofoils also differ from turbine aerofoils by function. For example compressor rotor blades are configured to do work on the air that passes over them, whereas turbine rotor blades have work done on them by exhaust gas which pass over them. Hence compressor aerofoils differ from turbine aerofoils by geometry, function and the working fluid which they are exposed to. Consequently aerodynamic and/or fluid dynamic features and considerations of compressor aerofoils and turbine aerofoils tend to be different as they must be configured for their different applications and locations in the device in which they are provided.

The turbine section 18 drives the compressor section 14. The compressor section 14 comprises an axial series of vane stages 46 and rotor blade stages 48. The rotor blade stages 48 comprise a rotor disc supporting an annular array of blades. The compressor section 14 also comprises a casing 50 that surrounds the rotor stages and supports the vane stages 48. The guide vane stages include an annular array of radially extending vanes that are mounted to the casing 50. The vanes are provided to present gas flow at an optimal angle for the blades at a given engine operational point. Some of the guide vane stages have variable vanes, where the angle of the vanes, about their own longitudinal axis, can be adjusted for angle according to air flow characteristics that can occur at different engine operations conditions.

The casing 50 defines a radially outer surface 52 of the passage 56 of the compressor 14. A radially inner surface 54 of the passage 56 is at least partly defined by a rotor drum 53 of the rotor which is partly defined by the annular array of blades 48 and will be described in more detail below.

The aerofoil of the present disclosure is described with reference to the above exemplary turbine engine having a single shaft or spool connecting a single, multistage compressor and a single, one or more stage turbine. However, it should be appreciated that the aerofoil of the present disclosure is equally applicable to two or three shaft engines and which can be used for industrial, aero or marine applications. The term rotor or rotor assembly is intended to include rotating (i.e. rotatable) components, including rotor blades and a rotor drum. The term stator or stator assembly is intended to include stationary or non-rotating components, including stator vanes and a stator casing. Conversely the term rotor is intended to relate a rotating component, to a stationary component such as a rotating blade and stationary casing or a rotating casing and a stationary blade or vane. The rotating component can be radially inward or radially outward of the stationary component.

The terms axial, radial and circumferential are made with reference to the rotational axis 20 of the engine.

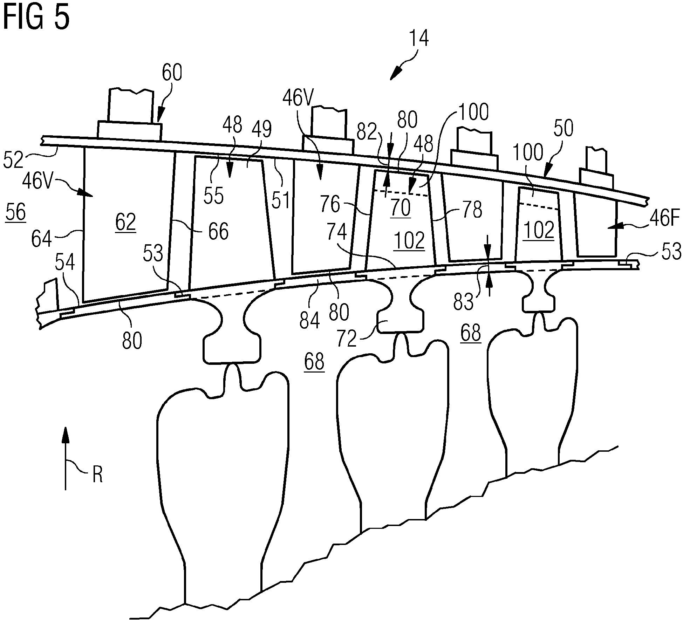

Referring to Figure 5, the compressor 14 of the turbine engine 10 includes alternating rows of stator guide vanes 46 and rotatable rotor blades 48 which each extend in a generally radial direction (indicated by arrow "R") into or across the passage 56.

The rotor blade stages 49 comprise rotor discs 68 supporting an annular array of blades. The rotor blades 48 are mounted between adjacent discs 68, but each annular array of rotor blades 48 could otherwise be mounted on a single disc 68. In each case the blades 48 comprise a mounting foot or root portion 72, a platform 74 mounted on the foot portion 72 and an aerofoil 70 having a leading edge 76, a trailing edge 78 and a blade tip 80. The aerofoil 70 is mounted on the platform 74 and extends radially outwardly therefrom towards the surface 52 of the casing 50 to define a blade tip gap, hg (which may also be termed a blade clearance 82).

The radially inner surface 54 of the passage 56 is at least partly defined by the platforms 74 of the blades 48 and compressor discs 68. In the alternative arrangement mentioned above, where the compressor blades 48 are mounted into a single disc the axial space between adjacent discs may be bridged by a ring 84, which may be annular or circumferentially segmented. The rings 84 are clamped between axially adjacent blade rows 48 and are facing the tip 80 of the guide vanes 46. In addition as a further alternative arrangement a separate segment or ring can be attached outside the compressor disc shown here as engaging a radially inward surface of the platforms.

Figure 5 shows two different types of guide vanes, variable geometry guide vanes 46V and fixed geometry guide vanes 46F. The variable geometry guide vanes 46V are mounted to the casing 50 or stator via conventional rotatable mountings 60. The guide vanes comprise an aerofoil 62, a leading edge 64, a trailing edge 66 and a tip 80. The rotatable mounting 60 is well known in the art as is the operation of the variable stator vanes and therefore no further description is required. The guide vanes 46 extend radially inwardly from the casing 50 towards the radially inner surface 54 of the passage 56 to define a vane tip gap or vane clearance 83 there between.

Collectively, the blade tip gap or blade clearance 82 and the vane tip gap or vane clearance 83 are referred to herein as the 'tip gap hg'. The term 'tip gap' is used herein to refer to a distance, usually a radial distance, between the tip's surface of the aerofoil portion and the rotor drum surface or stator casing surface.

Although the aerofoil of the present disclosure is described with reference to the compressor blade and its tip, the aerofoil may also be provided as a compressor stator vane, for example akin to vanes 46V and 46F.

The present disclosure may relate to an unshrouded compressor aerofoil and in particular may relate to a configuration of a tip of the compressor aerofoil to minimise aerodynamic losses.

The compressor aerofoil 70 comprises a suction surface wall 88 and a pressure surface wall 90 which meet at the leading edge 76 and the trailing edge 78. The suction surface wall 88 has a suction surface 89 and the pressure surface wall 90 has a pressure surface 91.

As shown in Figure 5, the compressor aerofoil 70 comprises a root portion 72 spaced apart from a tip portion 100 by a main body portion 102. The tip portion 100 extends in a first direction $R_b$ from the main body portion (102). When the aerofoil 70 is in situ in a compressor, the first direction $R_b$ corresponds to the radial direction "R".

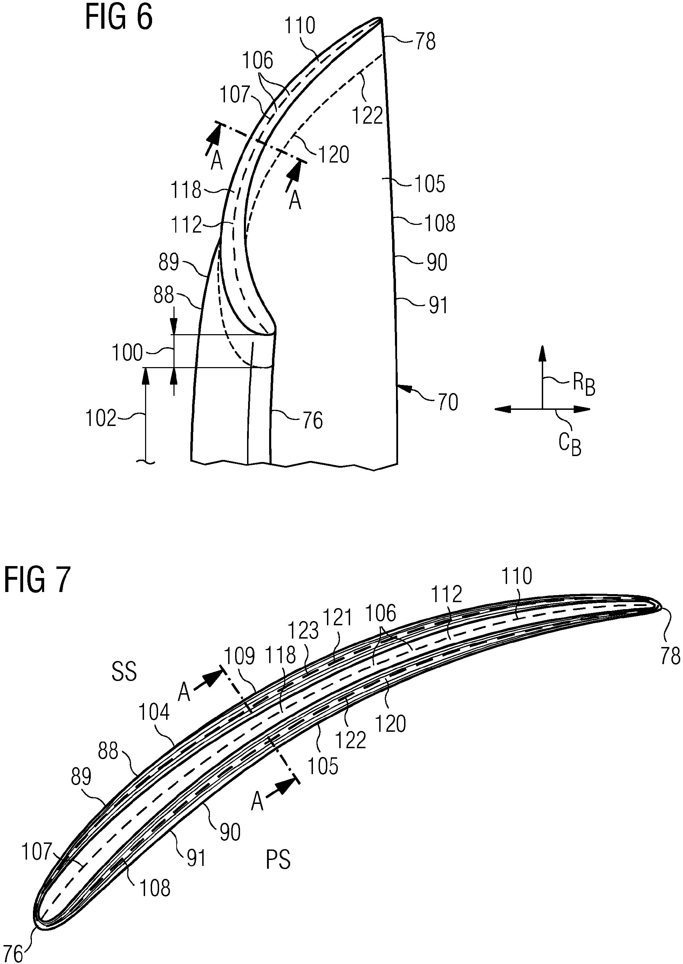

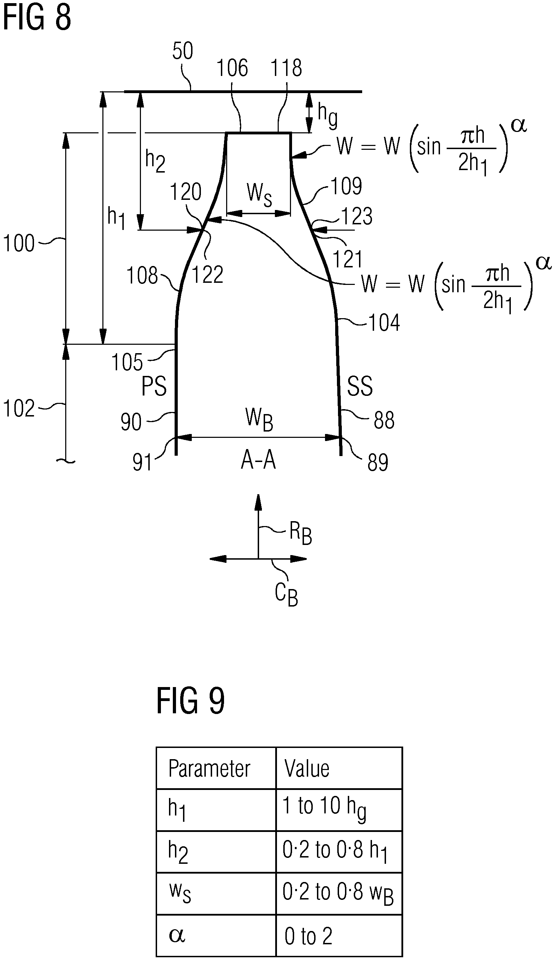

Figure 6 shows an enlarged view of part of a compressor aerofoil 70 according the present disclosure. Figure 7 shows an end on view of a part of the tip region of the aerofoil 70. Figure 8 shows a sectional view of the aerofoil at points A-A along the camber line 107 of the aerofoil, for example as indicated in Figure 6. Figure 9 summarises the relationship between various dimensions as indicated in Figure 8.

The main body portion 102 is defined by the convex suction surface wall 88 having a suction surface 89 and the concave pressure surface wall 90 having the pressure surface 91. The suction surface wall 88 and the pressure surface wall 90 meet at the leading edge 76 and at the trailing edge 78.

As shown in Figure 8 the pressure surface 91 and the suction surface 89 are spaced apart by a distance $w_B$, which varies between the leading edge 76 and trailing edge 78. Thus the pressure surface 91 and the suction surface 89 are spaced apart by a distance $w_B$ in a second direction $C_b$ at right angles to the first direction $R_b$, the second direction $C_b$ being the direction of aerofoil thickness, between the leading edge 76 and the trailing edge 78.

Hence $w_B$ is the distance between the pressure wall 90 and suction wall 88 at a section A-A at any point along the camber line 107 of the aerofoil between the leading edge 76 and trailing edge 78. Put another way, $w_B$ is the local thickness of the main body portion 102 a given location along the camber line 107 of the aerofoil that extends from the leading edge to the trailing edge. For the avoidance of doubt, the camber of an aerofoil can be defined by a camber line 107, which is the curve that is halfway between the pressure surface 91 and the suction surface 89.

The tip portion 100 comprises a tip wall 106 which extends continuously along a full extent of a camber line 107 of the aerofoil, the camber line 107 extending from the aerofoil leading edge 76 to the aerofoil trailing edge 78. The tip wall 106 defines at least part of a squealer 110.

In the example of Figure 7, the tip portion 100 further comprises a shoulder 105 provided on the pressure surface wall 90, wherein the shoulder 105 extends continuously between the leading edge 76 and the trailing edge 78. The tip portion 100 further comprises a transition region 108 which tapers from the shoulder 105 in a direction towards the tip wall 106. These features may be best illustrated when viewed in cross-section in a plane which extends in the first direction $R_b$ and second direction $C_b$, as shown in Figure 8.

The tip portion 100 also comprises a shoulder 104 provided on the suction surface wall 88, wherein the shoulder 104 extends continuously between the leading edge 76 and the trailing edge 78. The tip portion 100 further comprises a transition region 109 which tapers from the shoulder 104 in a direction towards the tip wall 106.

Hence a transition region 108, 109 tapers from each of the shoulders 104, 105 in a direction towards the tip wall 106.

The transition regions 108, 109 extend along the full extent of the camber line 107. That is to say, the transition regions 108, 109 extend all of the way from the leading edge 76 to the trailing edge 78.

The tip wall 106 defines a tip surface 118 which extends from the aerofoil leading edge 76 to the aerofoil trailing edge 78.

As shown in Figure 6, the transition region 108 of the pressure surface wall 90 extends from the shoulder 105 in a direction towards the suction surface 89, and at a pressure side inflexion point 120 the transition region 108 curves to extend in a direction away from the suction surface 89 toward the tip surface 118.

The transition region 109 of the suction surface wall 88 extends from the shoulder 104 in a direction towards the pressure surface 91, and at a suction side inflexion point 121 the transition region 109 curves to extend in a direction away from the pressure surface 91 toward the tip surface 118.

That is to say, and as best shown when viewed in cross-section in a plane which extends in the first direction $R_b$ and second direction $C_b$ as shown in Figure 8, the transition region 109 of the suction surface wall 88 comprises a convex region which extends from the shoulder 104 in a direction towards the pressure surface 91, and at a suction side inflexion point 121 the transition region 109 curves (i.e. changes direction) to form a concave region which extends in a direction away from the pressure surface 91 toward the tip surface 118. Likewise, the transition region 108 of the pressure surface wall 90 comprises a convex region which extends from the shoulder 105 in a direction towards the suction surface 89, and at a pressure side inflexion point 120 the transition region 108 curves (i.e. changes direction) to form a concave region which extends in a direction away from the suction surface 89 toward the tip surface 118.

As best shown in Figures 6, 7, and in the planar cross sectional view in Figure 8, the tip portion 100 further comprises a pressure surface inflexion line 122 defined by a change in curvature between convex and concave on the pressure surface 91, the pressure side inflexion point 120 being provided on the pressure side inflexion line 122, the pressure side inflexion line 122 extending continuously all of the way from the leading edge 76 to the trailing edge 78.

The tip portion 100 further comprises a suction surface inflexion line 123 defined by a change in curvature between convex and concave on the suction surface 89, the suction side inflexion point 121 being provided on the suction side inflexion line 123, the suction side inflexion line 123 extending continuously from the leading edge 76 all of the way to the trailing edge 78.

Hence the examples of Figures 6 to 9 illustrate a compressor aerofoil 70 for a turbine engine which has a shoulder 104, 105 provided on both of the suction surface wall 88 and pressure surface wall 90, wherein the shoulder 104, 105 extends between the leading edge 76 and the trailing edge 78. Hence shoulders 104, 105 are provided on both of the suction surface wall 88 and pressure surface wall 90.

The cross sectional shape of the tip portion 100, when viewed in a plane which extends in the first direction $R_b$ and second direction $C_b$, including the transition regions 108, 109, varies smoothly (i.e. continuously, without interruption) along the full extent of the camber line 107.

Hence the tip wall 106 defines at least part of a squealer 110 which continuously increases in width $w_s$ from the leading edge 76 along the full extent of the camber line 107 to a point of maximum width, and then continuously decreases in width $w_S$ all the way to the trailing edge 78.

Hence the tip surface 118 of the tip wall 106 (i.e. of the squealer 110) may increase in width $w_S$ along its length from the leading edge 76 and may increase in width $w_S$ along its length from the trailing edge 78.

Put another way, the tip surface 118 of the tip wall 106 may decrease in width $w_S$ along its length towards the leading edge 76, and decrease in width $w_S$ along its length towards the trailing edge 78.

As shown in Figures 6, 7, the point of maximum width $w_S$ of the tip surface 118 of the tip portion 100 may be closer to the leading edge 76 than to the trailing edge 78. In an alternative example, the point of maximum width $w_S$ of the tip surface 118 of the tip portion 100 may be closer to the trailing edge 78 than to the leading edge 76.

The point of maximum width $w_S$ of the tip surface 118 of the tip portion 100 may be between 0.1 and 0.9 of the distance along the camber line 107 between the leading edge 76 and trailing edge 78. In an alternative example, the point of maximum width $w_S$ of the tip surface 118 of the tip portion 100 may be between 0.1 and 0.9 of the distance along the camber line 107 between the trailing edge 78 and leading edge 76.

The point of maximum width $w_S$ of the tip surface 118 of the tip portion 100 may be between 0.1 and 0.3 of the distance along the camber line 107 between the leading edge 76 and trailing edge 78. In an alternative example the point of maximum width $w_S$ of the tip surface 118 of the tip portion 100 may be between 0.1 and 0.3 of the distance along the camber line 107 between the trailing edge 78 and leading edge 76.

The distance $w_B$ (the distance between the pressure wall 90 and suction wall 88 at a section A-A at any point along the camber line 107 of the aerofoil between the leading edge and trailing edge) may have a maximum value at a region between the leading edge 76 and trailing edge 78.

The distance $w_B$ between the pressure surface 91 and the suction surface 89 may decrease in value from the maximum value towards the leading edge 76.

The distance $w_B$ between the pressure surface 91 and the suction surface 89 may decrease in value from the maximum value towards the trailing edge 78.

The squealer width $w_S$ may have a value of at least 0.2, but not more than 0.8, of the distance $w_B$ between pressure surface 91 and the suction surface 89 measured at the same section A-A of the main body portion 102.

That is to say the width $w_S$ of the tip wall 106 has a value of at least 0.2, but not more than 0.8, of the distance $w_B$ measured at the same section on the camber line 107 between the leading edge and trailing edge.

The distance $w_B$ may vary in value along the length of the tip portion 100, and hence the distance $w_B$ may vary accordingly.

With reference to a compressor rotor assembly for a turbine engine comprising a compressor aerofoil according to the present disclosure, and as described above and shown in Figure 8 the compressor rotor assembly comprises a casing 50 and a compressor aerofoil 70 wherein the casing 50 and the compressor aerofoil 70 define a tip gap, hg, defined between the tip surface and the casing.

The respective shoulders 104, 105 of each example are provided a distance $h_1$ from the casing 50, where $h_1$ has a value of at least $h_g$, but not more than 10 times the distance $h_g$. Put another way, the distance $h_1$ has a value of at least $h_g$, but not more than 10 $h_g$

A distance $h_2$ from the inflexion line 122, 123 to the casing 50 has a value of at least about 0.2, but not more than about 0.8, of $h_1$. Put another way the distance $h_2$ from the inflexion line 122,123 to the casing 50 has a value of at least 0.2 $h_1$ but not more than 0.8 $h_1$.

The distance "W" of a point on the transition region 108, 109 of one of the suction surface wall 88 or pressure surface wall 90 to the other wall for a given height "h" from the tip surface 118 is defined by :

$$W = W_B \left( sin \frac{\pi h}{2h_1} \right)^{\alpha}$$

where $\alpha$ (alpha) has a value of at least zero but no greater than 2.

Put another way, W is the spanned (i.e. shortest) distance, at a given height h from the tip surface 118, between points on the transition region 108 of the suction surface wall 88 to the transition region 109 on the pressure surface wall 90, as one moves along the surface of the transition regions 108,109 between the shoulders 104, 105 and tip surface 118.

By way of example only the distance $w_B$ between the pressure surface 91 and the suction surface 89 may be in the range of 1 mm to 7 mm.

By way of further example, the tip gap *hg* may be in the range of 0.2 mm to 1.5 mm.

By way of further example, the overall height of the aerofoil, e.g. combined height of the main body section 102 and tip portion 100 may be in the range of 15 mm to 150 mm.

In operation in a compressor, the geometry of the compressor aerofoil of the present disclosure differs in two ways from arrangements of the related art, for example as shown in Figures 1, 2, 3.

In both the examples of Figures 6 to 9 the concave-convex profile in the transition regions 108, 109 which form the tip wall region of the squealer 110 inhibit primary flow leakage by reducing the overall pressure difference across most the tip wall 106 and hence the loss due to tip flow is lower.

This is achieved because the geometry of the tip portion 100 (namely progressively reducing the thickness of the aerofoil towards the tip to result in a squealer along the camber line 107 of the blade) increases the momentum of the tip leakage flow thus reducing the mixing between the tip leakage flow (i.e. flows 4, 5 in Figure 1) and the main stream flow. It also reduces the undesirable mismatch between the tip leakage flow angle and the main stream flow angle. This diminishes the strength of the interaction between the tip leakage flow and the main stream flow which in turn reduces loss in efficiency relative to examples of the related art.

The squealer 110, being narrower than the overall width of the main body 102, causes the pressure difference across the tip surface 118 as a whole to be lower than if the tip surface 118 had the same cross section as the main body 102. Hence secondary leakage flow across the tip surface 118 will be less than in examples of the related art for example as shown in Figure 1, and the primary tip leakage flow vortex formed is consequently of lesser intensity as there is less secondary leakage flow feeding it than in examples of the related art.

Additionally, since the squealer 110 of the aerofoil 70 is narrower than the walls of main body 102, the configuration is frictionally less resistant to movement than an example of the related art in which aerofoil tip has the same cross-section as the main body (for example as shown in Figure 1). That is to say, since the squealer 110 of the present disclosure has a relatively small surface area, the frictional and aerodynamic forces generated by it with respect to the casing 50 will be less than in examples of the related art.

Thus the amount of over tip leakage flow flowing over the tip surface 118 is reduced, as is potential frictional resistance. The reduction in the amount of secondary tip leakage flow is beneficial because there is then less interaction with (e.g. feeding of) the over tip leakage vortex.

Hence there is provided an aerofoil rotor blade and/or stator vane for a compressor for a turbine engine configured to reduce tip leakage flow and hence reduce strength of the interaction between the leakage flow and the main stream flow which in turn reduces overall loss in efficiency.

Hence the compressor aerofoil of the present disclosure results in a compressor of greater efficiency compared to known arrangements.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A compressor aerofoil (70) for a turbine engine, the compressor aerofoil (70) comprising:

   a tip portion (100) which extends in a first direction $R_b$ from a main body portion (102);
   the main body portion (102) defined by :

   a suction surface wall (88) having a suction surface (89),
   a pressure surface wall (90) having a pressure surface (91), whereby
   the suction surface wall (88) and the pressure surface wall (90) meet at a leading edge (76) and a trailing edge (78), and
   the pressure surface (91) and the suction surface (89) are spaced apart by a distance $w_B$ in a second direction $C_b$ at right angles to the first direction $R_b$ between the leading edge (76) and the trailing edge (78), and

the tip portion (100) comprises :

a tip wall (106) which extends continuously along a camber line (107) of the aerofoil, the camber line (107) extending from the aerofoil leading edge (76) to the aerofoil trailing edge (78);
a shoulder (104, 105) is provided on each of the suction surface wall (88) and pressure surface wall (90); wherein

the suction surface wall shoulder (105) extends between the leading edge (76) and the trailing edge (78);
the pressure surface wall shoulder (104) extends between the leading edge (76) and the trailing edge (78); and
a transition region (108, 109) tapers from each of the shoulders (104, 105) in a direction towards the tip wall (106);
the cross sectional shape of the tip portion (100) varies along the full extent of the camber line (107); and
the tip wall (106) defines a squealer (110) with a tip surface (118) which increases in width $w_s$ from the leading edge (76) to a point of maximum width, and then decreases in width $w_S$ all the way to the trailing edge (78).

2. A compressor aerofoil (70) as claimed in claim 1 wherein :
the point of maximum width of the squealer (110) tip surface (118) is closer to the leading edge (76) than to the trailing edge (78).

3. A compressor aerofoil (70) as claimed in claim 2 wherein :
the point of maximum width of the squealer (110) tip surface (118) is between 0.1 and 0.3 of the distance along the camber line (107) between the leading edge (76) and trailing edge (78).

4. A compressor aerofoil (70) as claimed in any one of claims 1 to 3 wherein :

the transition region (109) of the suction surface wall (88) comprises a convex region which extends from the shoulder (104) in a direction towards the pressure surface (91), and

at a suction side inflexion point (121) the transition region (109) curves to form a concave region which extends in a direction away from the pressure surface (91) toward the tip surface (118); and

the transition region (108) of the pressure surface wall (90) comprises a convex region which extends from the shoulder (105) in a direction towards the suction surface (89), and

at a pressure side inflexion point (120) the transition region (108) curves to form a concave region which extends in a direction away from the suction surface (89) toward the tip surface (118).

5. A compressor aerofoil (70) as claimed in any one of the preceding claims wherein the tip portion (100) further comprises :

a suction surface inflexion line (123) defined by the change in curvature on the suction surface (89); and

the suction side inflexion point (121) being provided on the pressure side inflexion line (123);
the suction side inflexion line (123) extending between the trailing edge (78) and the leading edge (76); and

a pressure surface inflexion line (122) defined by the change in curvature on the pressure surface (91);

the pressure side inflexion point (120) being provided on the pressure side inflexion line (122);
the pressure side inflexion line (122) extending between the leading edge (76) and the trailing edge (78).

6. A compressor aerofoil (70) as claimed in any one of the preceding claims wherein :

the distance $w_B$ has a maximum value at a region between the leading edge (76) and trailing edge (78);
the distance $w_B$ between the pressure surface (91) and the suction surface (89) decreases in value from the maximum value towards the leading edge (76); and
the distance $w_B$ between the pressure surface (91) and the suction surface (89) decreases in value from the maximum value towards the trailing edge (78).

7. A compressor aerofoil (70) as claimed in claim 6 wherein

the width $w_S$ of the tip wall (106),
has a value of at least 0.2, but no more than 0.8, of the distance $w_B$.

**8.** A compressor rotor assembly for a turbine engine, the compressor rotor assembly comprising a casing (50) and a compressor aerofoil (70) as claimed in any one of claims 1 to 7, wherein
the casing (50) and the compressor aerofoil (70) define a tip gap *hg* defined between the tip surface (118) and the casing (50).

**9.** A compressor rotor assembly as claimed in claim 9 wherein :

the shoulder (104, 105) is provided a distance $h_1$ from the casing (50); where
$h_1$ has a value of at least $h_g$, but not more than 10 times the distance $h_g$.

**10.** A compressor rotor assembly as claimed in claim 9 wherein :
a distance $h_2$ from the inflexion line (122,123) to the casing (50) has a value of at least $0.2\,h_1$ but no more than $0.8\,h_1$.

**11.** A compressor rotor assembly as claimed in claims 9, 10 wherein :
the distance "W" of a point on the transition region (108, 109) of one of the suction surface wall (88) or pressure surface wall (90) to the other wall for a given height "h" from the tip surface (118) is defined by :

$$W = W_B \left( sin\frac{\pi h}{2h_1} \right)^{\alpha}$$

where $\alpha$ (alpha) has a value of at least zero but no greater than 2.

FIG 1

FIG 2    (Related Art)

FIG 3    (Related Art)

FIG 4

EP 3 561 226 A1

# FIG 5

FIG 6

110
106
107
78
122
120
A
A
118
105
112
108
89
90
88
91
100
70
102
76

$R_B$
$C_B$

FIG 7

SS
123 121 106 112 110
109 118
A 78
104
88 120
89 122 105
A
107 90
91 PS
108
76

## FIG 8

$$W = W \left( \sin \frac{\pi h}{2h_1} \right)^{\alpha}$$

$$W = W \left( \sin \frac{\pi h}{2h_1} \right)^{\alpha}$$

## FIG 9

| Parameter | Value |
|---|---|
| $h_1$ | 1 to 10 $h_g$ |
| $h_2$ | 0·2 to 0·8 $h_1$ |
| $w_S$ | 0·2 to 0·8 $w_B$ |
| $\alpha$ | 0 to 2 |

Europäisches
Patentamt

European
Patent Office

Office européen
des brevets

# EUROPEAN SEARCH REPORT

Application Number

EP 18 16 8894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 514 922 A2 (GEN ELECTRIC [US]) 24 October 2012 (2012-10-24) * page 17; figures 4-9 * | 1-11 | INV. F01D5/14 F01D5/20 |
| X | GB 2 310 897 A (UNITED TECHNOLOGIES CORP [US]) 10 September 1997 (1997-09-10) * figures 10,11 * | 1-3,8 | |
| X | DE 10 2009 036406 A1 (MTU AERO ENGINES GMBH [DE]) 10 February 2011 (2011-02-10) * abstract; figure 2 * | 1,2,8 | |
| X | EP 2 696 031 A1 (MTU AERO ENGINES AG [DE]) 12 February 2014 (2014-02-12) * paragraphs [0010], [0011], [0028] - [0034]; figures 6,11,12 * | 4-11 | |

TECHNICAL FIELDS
SEARCHED        (IPC)

F01D

The present search report has been drawn up for all claims

| Place of search | Date of completion of the search | Examiner |
|---|---|---|
| Munich | 17 October 2018 | Avramidis, Pavlos |

## ANNEX TO THE EUROPEAN SEARCH REPORT
## ON EUROPEAN PATENT APPLICATION NO.

EP 18 16 8894

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2018

| Patent document cited in search report | | Publication date | Patent family member(s) | | Publication date |
|---|---|---|---|---|---|
| EP 2514922 | A2 | 24-10-2012 | CN 102758792 A | | 31-10-2012 |
| | | | EP 2514922 A2 | | 24-10-2012 |
| | | | US 2012269638 A1 | | 25-10-2012 |
| GB 2310897 | A | 10-09-1997 | NONE | | |
| DE 102009036406 | A1 | 10-02-2011 | CN 102472111 A | | 23-05-2012 |
| | | | DE 102009036406 A1 | | 10-02-2011 |
| | | | EP 2462320 A2 | | 13-06-2012 |
| | | | US 2012128480 A1 | | 24-05-2012 |
| | | | WO 2011015193 A2 | | 10-02-2011 |
| EP 2696031 | A1 | 12-02-2014 | EP 2696031 A1 | | 12-02-2014 |
| | | | US 2014044553 A1 | | 13-02-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9399918 B2

- EP 2514922 A2